# EUROPEAN PATENT APPLICATION

(11) **EP 2 545 965 A2**
(43) Date of publication of application: **16.01.2013**
(21) Application number: 12172095.7
(22) Date of filing: 14.06.2012
(51) Int. Cl.: A63B 69/06, A63B 24/00

(54) **Rowing simulator and training aid**

(30) Priority: 12.07.2011 GB 201111939
(71) Applicant: Smith, Christopher, 18000 Bourges (FR)
(72) Inventor: Smith, Christopher, 18000 Bourges (FR)

(57) **Abstract**

An apparatus that enables one or more people to simulate on land the action of rowing on water, including the simulation of an oar blade entering into and being extracted from water that is moving relative to a boat, and including feedback on rowing performance and technique. The apparatus includes the same fundamental elements as a real rowing boat, with one or two oar handles 6 per person, a sliding seat 4, adjustable footplate 5 and rigging 7 that supports rowlocks. The inertia, momentum and drag of a real boat are simulated using a damped flywheel. The percentage of torque that is transmitted between each oar handle and this flywheel is controlled using magnetic clutches, and is based upon an analysis of the position and angle of each simulated oar blade.

## Description

### Background

This invention relates to a rowing simulator and training aid.

Rowing is a sport that requires a high level of skill. There are many elements that contribute towards a good technique, and rowing performance can only be improved with regular practice.

Although rowing in a real boat on water is essential, simulation on dry land is beneficial and can enable also closer scrutiny of rowing technique.

However, in order to practice and develop rowing technique on dry land it should be possible to:
- mimic the same body movements as in a real boat; for example, with hands that follow an arc about a rowlock;
- practice good blade-work; for example, simulating quick and clean entry into and extraction from water that is moving relative to the boat;
- provide useful and measurable feedback on performance.

Furthermore, dry land simulation for rowing crews should take into account how well individual crew members synchronise their body movements and their combined performance.

At present, the above requirements are not met completely by any existing rowing simulators / machines, as:
- a number of machines have a single handle that does not pivot about a rowlock, and therefore does not enable a rower to mimic the same body movements as in a real boat;
- for those machines with pivoting handles, the resistance on the oar handle is independent of the direction and angle in which the handle is being pulled or pushed, and therefore this does not enable a rower to practice good oar and blade technique;
- indoor tanks do enable the main elements of rowing technique to be practised, but they do not provide a comparable feel to rowing (e.g. the water is stationary relative to the simulated boat and the rower cannot sense the acceleration and drag of a boat), they do not have any measurable feedback for monitoring progression in technique (or for comparing the technique of different rowers), they do not show how well a crew is rowing together, they require a lot of space, and they are expensive to build.

### Citations

A search of the espacenet database by the inventor has identified a number of patents that are trying to solve the same problem, but none of which share the same unique solution:

| **Patent** | **Key difference when compared with present invention** | |
|---|---|---|
| WO 2011021144 "ROWING SIMULATOR MOTION-RESISTANCE UNIT" | ● | Invention uses tanks of moving water, rather than a flywheel, to simulate the inertia, momentum and drag of a real boat. |
| WO 9722389 "ROWING SIMUATOR" | ● | Invention does not simulate the trajectory of an oar blade and adjust the resistance felt on each oar handle dependent upon this simulation. |
| GB 2238001 "APPARATUS AND METHOD FOR TRAINING OARSMEN" | ● | Invention does not adjust the percentage of torque transmitted between each oar handle and the flywheel based upon the modelling of oar blade position and angle; |
| | ● | Torque is not transmitted back from the flywheel to an oar handle. |
| WO 2008141160 "SIMULATED ROWING MACHINE" | ● | Invention does not simulate the trajectory of an oar blade and adjust the resistance felt on each oar handle dependent upon this simulation. |
| WO 2008137841 "BILATERALLY ACTUATED SCULLING TRAINER" | ● | Invention does not simulate the trajectory of an oar blade and adjust the resistance felt on each oar handle dependent upon this simulation. |

### Statement of Invention

The present invention proposes an apparatus that enables one or more people to simulate on land the action of rowing on water with one or two oar handles per person, including the simulation of an oar blade entering into and being extracted from water that is moving relative to a boat, and including feedback on rowing performance and technique.

The apparatus enables the simulation of rowing on water, as it:
- includes the same fundamental elements as a real rowing boat, with a footplate(s), sliding seat(s) and an oar handle(s) pivoting about a rowlock(s);
- enables these elements to be configured to optimise the rowing position and movements for different size people;
- enables a rower to follow exactly the same body movements as they would when rowing in a real boat;
- simulates the inertia, momentum and drag of a real boat, using a damped flywheel;
- monitors the angle of each oar handle in three planes about its respective rowlock and uses this data to model the path of each simulated oar blade;
- adjusts the percentage of torque transmitted between each oar handle and the flywheel based upon the modelling of oar blade position and angle;
- allows torque to be transmitted back from the flywheel to an oar handle (again dependent upon modelling of oar blade position and angle), thereby simulating the forces that are felt on an oar when a boat is moving in water;
- enables multiple rowers to practice together, acting in unison on the same flywheel.

The apparatus enables feedback on rowing performance and technique, as it monitors and displays:
- the path of each oar handle and simulated oar blade;
- the power delivered through each oar handle throughout its path;
- whether a rower is correctly pushing with his/her legs before pulling with his/her arms and vice-versa.

### Advantages

The present invention enables a rower to practice and review their rowing technique, particularly in terms of how well they are controlling an oar(s).

Preferably, it is also possible for disabled rowers to use the apparatus, with the fitting of disabled seats.

Preferably, it is possible for multiple rowers to simulate rowing together.

Preferably, the apparatus includes interchangeable oar handles, to optimise the simulation for both sculling (with two oars) and "sweep oar" rowing (with a single oar).

Preferably, the apparatus will simulate how a real boat may roll about its longitudinal axis.

### Introduction to Drawings

An example of the invention will now be described with reference to the accompanying drawings:

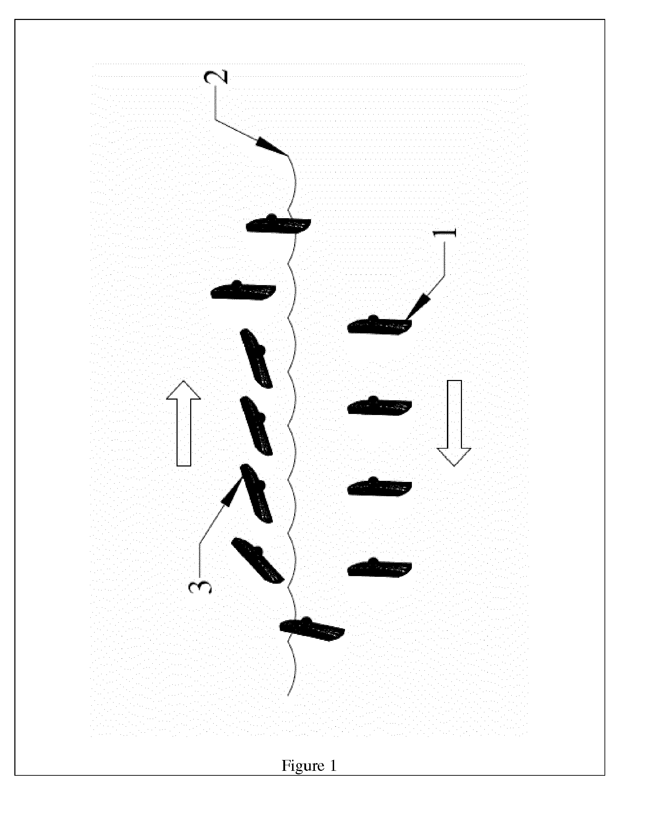

- Figure 1 shows a schematic representation of the typical path of an oar blade below and above the water's surface during a complete rowing stroke;
- Figure 2 shows an isometric view of the main components according to the invention;
- Figure 3 shows a front elevation of the main components according to the invention;
- Figure 4 shows an exploded isometric view where the oar handle intersects with the rowlock according to the invention;

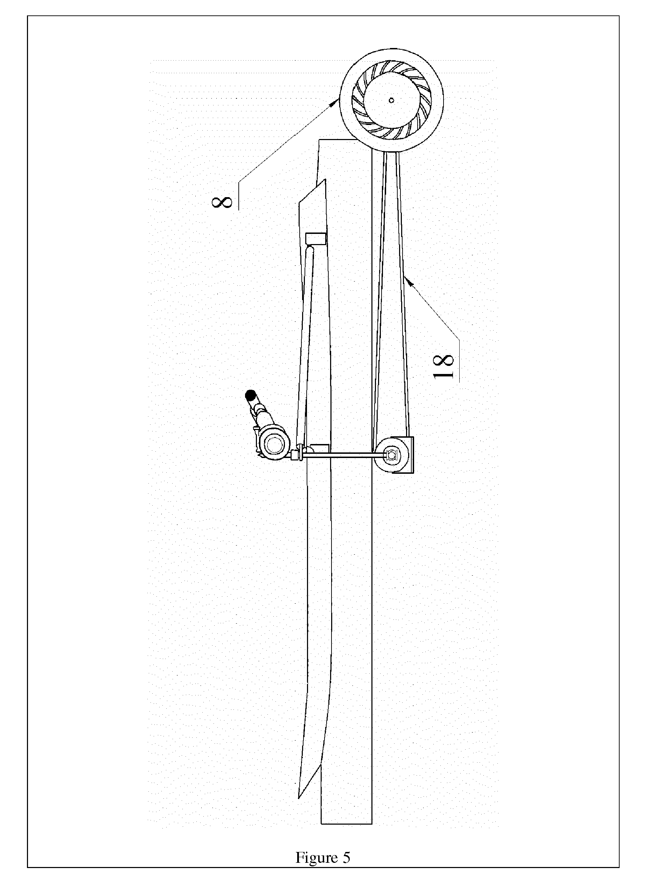

- Figure 5 shows a side elevation of the main components according to the invention; and
- Figure 6 shows a plan view to illustrate how an embodiment of the invention may be configured for multiple rowers with one or more oar blades each (features such as sliding seats and footplates are not included in this figure, so that the linking of multiple oar blades can be seen).

In order to view the main components of the invention, a complete framework is not shown in any of the figures mentioned above.

### Detailed Description

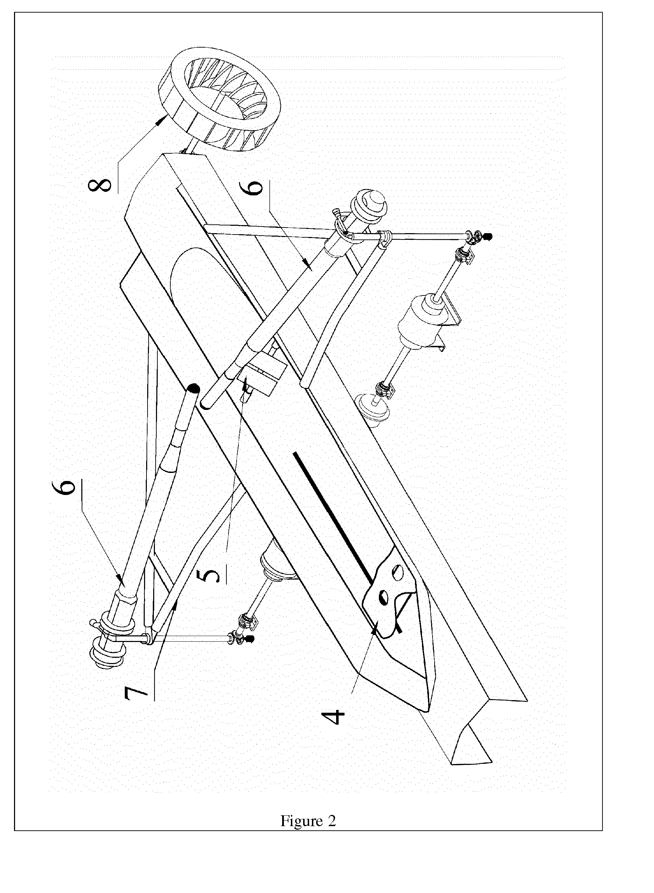

The invention includes the same fundamental elements as a real rowing boat with a sliding seat 4, adjustable footplate 5, oar handle(s) 6 and rigging 7 that supports rowlocks 15. Figure 2 shows one embodiment of the present invention, configured for a single rower with a single seat and two oar handles for simulating sculling. Other embodiments of the invention may include multiple seats and pairs of rowlocks, to enable rowing crews to practice together.

A counterbalance 16 on each oar handle enables an oar handle to simulate the same feeling as a real oar that floats in water.

A clamp 17 on a telescopic shaft enables someone to adjust the height of a rowlock in order to optimise the height of a corresponding oar handle and (when relevant) to configure either the left or right rowlock to be higher than the other for sculling.

A damped flywheel 8 simulates the inertia, momentum and drag of a real boat. Damping is provided for example by installing a centrifugal fan within a housing (with air inlets that can be adjusted to vary the drag), or by installing an impellor inside a container of water.

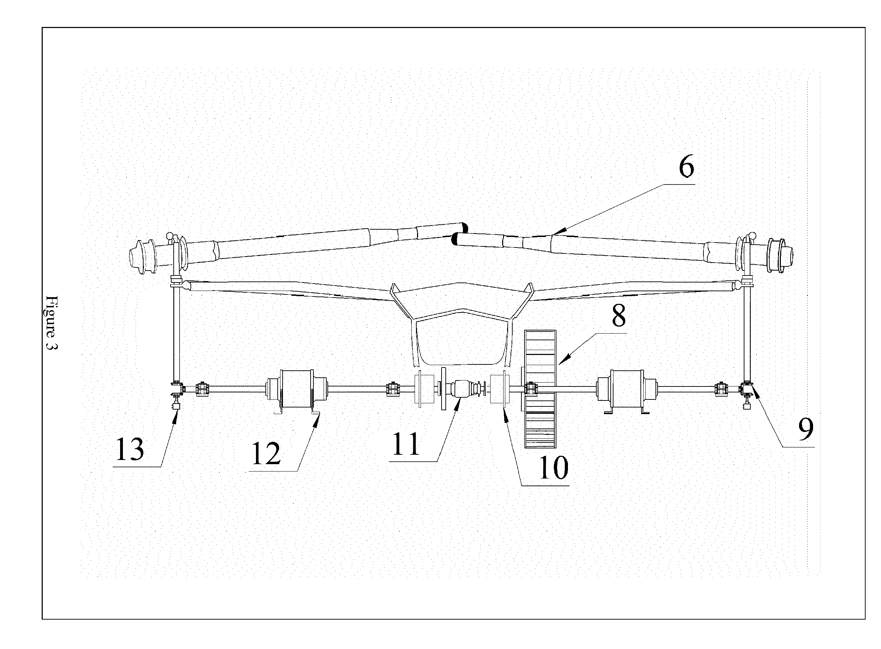

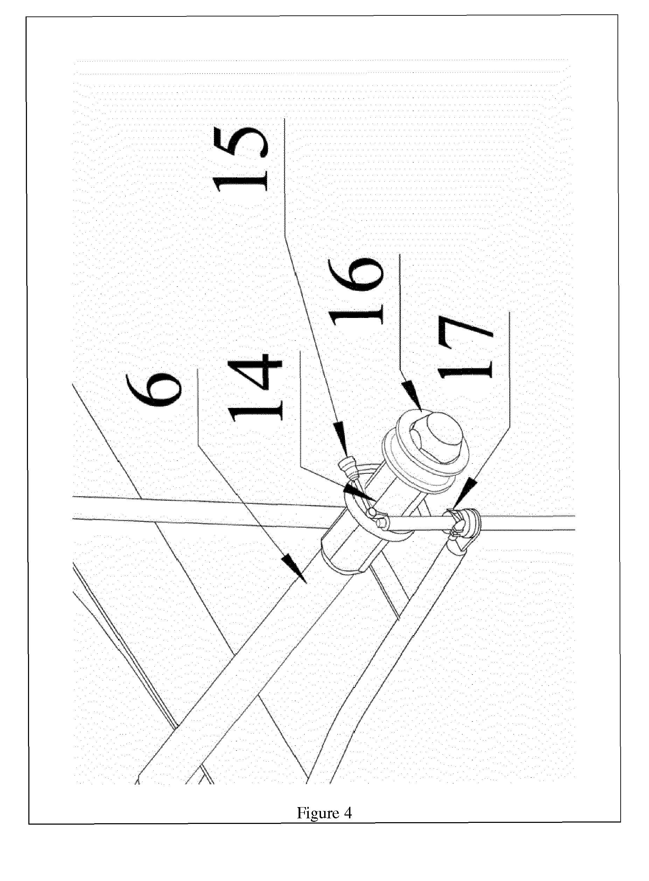

An embodiment of the present invention uses three potentiometers per oar handle, to measure the angle that each oar handle makes about its own axis, about the axis of its rowlock, and about the horizontal plane. Figure 3 shows how such a potentiometer 13 may be fitted to measure the angle an oar handle makes about the axis of the rowlock. As an alternative to three potentiometers, Figure 4 shows how a Micro-Electro-Mechanical-System (MEMS) gyroscope may be positioned at point 14 within an oar handle (where it pivots in the rowlock) to measure the angle of an oar handle about its own axis and about the horizontal plane.

As a rower moves an oar handle, this in turn rotates a corresponding rowlock and an attached vertical shaft. Bevel gears 9 transmit this rotation to a corresponding horizontal shaft.

Torque transducers (e.g. four strain gauges connected in a "Wheatstone Bridge" configuration) measure the torque on each vertical shaft. These are not shown in any of the figures.

An embodiment of the present invention uses a magnetic particle clutch 10 to adjust the percentage of torque that is transmitted between a rotating rowlock and the flywheel, based upon an analysis of oar handle angles mentioned above. For example, when the angle that an oar handle makes with the horizontal plane is such that a simulated oar blade 3 would be above the water's surface 2, the clutch is completely disengaged, and no torque is transmitted to or from the flywheel.

Conversely, when the angle an oar handle makes with the horizontal plane and about its own axis is such that a simulated oar blade 1 would be below and perpendicular to the water's surface, then the clutch is completely engaged and 100% of the torque is transmitted from that oar handle to or from the flywheel.

In other embodiments of the present invention, magnetic clutches with fluid couplings or torque converters may be used to provide the same functionality as the magnetic particle clutch.

An embodiment of the present invention may include planetary gearboxes 12 to reduce the torque and increase the speed of rotation of the horizontal shafts driven by each oar handle. This may enable smaller magnetic clutches to be used.

A limited slip differential (such as a "Torsen" differential) 11 combines the torque from two oar handles when a rower is simulating sculling. When a rower is simulating "sweep oar" rowing, with a single oar handle, the differential allows all of the torque from this oar handle (apart from negligible frictional losses) to be transmitted to the flywheel.

A chain drive 18 connects the limited slip differential to the flywheel.

An embodiment of the invention includes a device (such as an additional MEMS gyroscope) to measure the velocity of the sliding seat. Consequently, it is possible to identify when a rower is pulling with their arms before they have finished pushing with their legs (a sign of poor rowing technique) by comparing the seat velocity to the angular velocity of the rowlock.

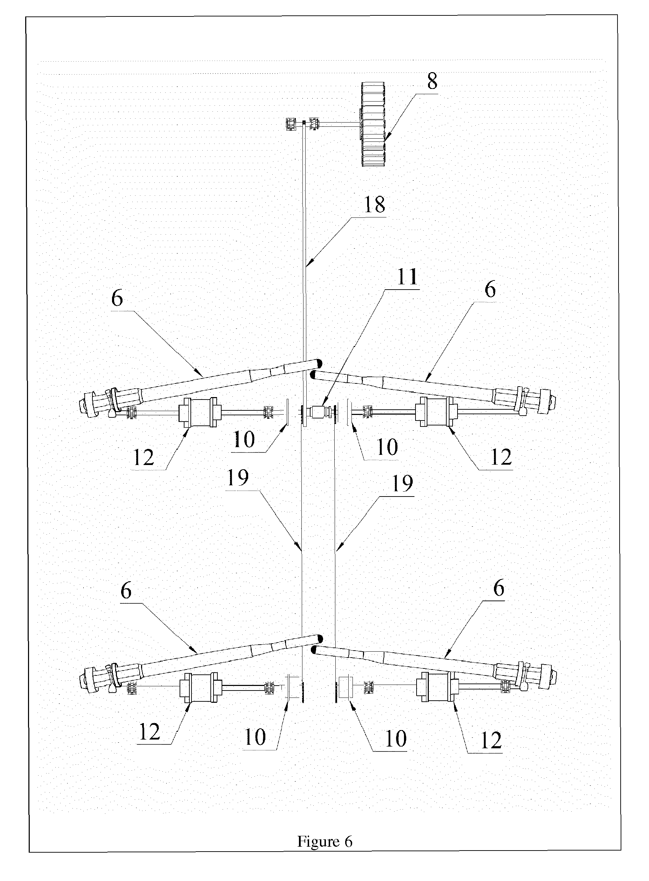

Figure 6 shows an embodiment of the present invention configured for multiple rowers. In this configuration, chain drives 19 link the drive shafts of oar handles on each side of the apparatus. Furthermore (as for the configuration with a single rower) a single limited slip differential 11 connects the drive shafts from the left and right side of the apparatus and the chain drive 18 to the flywheel 8. In all configurations (i.e. one or more rowers with one or more oar handles each), the percentage of torque transmitted between each oar handle and the flywheel is controlled by individual magnetic clutches 10 (dependent upon the angle that each oar handle makes in three planes about its respective rowlock).

The embodiment of the present invention for multiple rowers allows each rower to practice sculling (with two oar handles each) or "sweep oar" rowing (with one oar each). For "sweep oar" rowing, the invention works with each rower using an oar handle either on the same or opposite sides of the apparatus.

An embodiment of the present invention (not shown in any of the figures) simulates how a real boat may roll about its longitudinal axis:
- the frame (which supports the sliding seat, footplate, and riggers) is suspended and free to rotate about its longitudinal axis, with pivots above its centre of mass;
- a potentiometer measures the angle of roll of the frame;
- an electric actuator applies a variable amount of torque to the frame about these pivots in either a clockwise or anti-clockwise direction, dependent upon the trajectory of each simulated oar blade and the angle that each one makes about its own axis. For example, if a simulated oar blade on the right-side of the apparatus is not perpendicular to the simulated water's surface when it is extracted from the water, the electric actuator will provide clockwise torque to the frame for the duration of this extraction;
- the frame will tend also to roll about the pivots if the combined centre of mass of the rower(s) and oar handle(s) is unaligned with the vertical plane of the pivot's axis;
- when the frame rolls about its longitudinal axis, the modeling of simulated oar blade trajectory takes into account the angle of roll to determine if a simulated oar blade is above or below the simulated water's surface;
- in this embodiment, it is possible to lock the frame in position and switch off the electric actuator, for example if a novice rower prefers to practice without roll simulation, or if a single rower is practicing "sweep oar" rowing with a single oar blade.

A console (not shown in any figures):
- takes inputs from the MEMS gyroscopes and /or potentiometers;
- takes inputs from the torque transducers;
- controls the magnetic clutches;
- controls the electric actuator for applying a torque to the pivoting frame;
- calculates the power delivered by each oar handle based upon readings from potentiometers (to calculate the angular velocity of an oar handle about its rowlock) and torque transducers; and
- provides feedback to rowers on performance and technique.

As torque may also be transmitted back from a spinning flywheel to an oar handle (simulating when someone leaves an oar of a moving boat in water or when a rower "catches a crab") the console may include a safety feature to disengage a magnetic clutch when the angle or acceleration of a rowlock about its own axis exceeds configured limits. An embodiment of the present invention may also include a physical stop, so that an oar handle cannot rotate beyond a physical limit.

## Claims

1. A piece of equipment that enables a person to simulate on land the action of rowing on water with one or two oar handles, including the simulation of an oar blade entering into and being extracted from water that is moving relative to a boat, comprising:
● the same fundamental elements as a real rowing boat, with a footplate(s), sliding seat(s), oar handles, rowlocks and riggers to hold these rowlocks;
● a damped flywheel to simulate the inertia, momentum and drag of a real rowing boat;
● MEMS gyroscopes and /or potentiometers that measure the angle that each oar handle makes in three planes about its respective rowlock;
● torque transducers that measure the torque applied through each rowlock;
● magnetic clutches that control the percentage of torque transmitted between each oar handle and the flywheel;
● a limited slip differential to combine the torque from oar handles on either side of the equipment;
● and a microprocessor and display screen that:
- monitors the inputs from each MEMS gyroscope and /or potentiometer;
- monitors the inputs from each torque transducer;
- controls the percentage of torque that should be transmitted through each magnetic clutch;
- and provides feedback on rowing performance and technique.

2. A piece of equipment according to claim 1, which allows multiple people to simulate on land the action of rowing together with one or two oar handles per person.

3. A piece of equipment according to claim 1, which may be fitted with a seat(s) for a disabled rower(s).

4. A piece of equipment according to claim 1, in which the frame supporting the seat, footplate and riggers may be free to rotate on pivots about its longitudinal axis (positioned above its centre of mass), and in which this angle of roll is measured with a potentiometer.

5. A piece of equipment according to claim 4, in which an electric actuator may apply a clockwise or anti-clockwise torque to the frame about these pivots, with a duration and level that is dependent upon the trajectory of each simulated oar blade and the angle that each one makes about its own axis.

6. A piece of equipment according to claim 1, in which the position of a footplate relative to a sliding seat and the angle it makes with the vertical plane may be adjusted and locked in position.

7. A piece of equipment according to claim 1, in which each oar handle is counterbalanced about a rowlock, thereby simulating how a real oar floats in water.

8. A piece of equipment according to claim 1, in which the height of each rowlock may be adjusted to allow for different size rowers and personal preferences.

9. A piece of equipment according to claim 1, in which a person simulates the same body movements and trajectory as rowing in a real boat, with a sliding seat(s) that moves relative to a footplate(s) and oar handles that pivot in three planes about rowlocks.

10. A piece of equipment according to claim 1, where the damping of the flywheel may be achieved by either including a centrifugal fan within a housing that restricts air flow into the fan, or by including an impellor within a container of water.

11. A piece of equipment according to claim 1, in which the microprocessor monitors the velocity of each sliding seat.

12. A piece of equipment according to claim 1, which includes one or more ports (such as Universal Serial Bus) for connecting other computer peripherals (such as a printer) and for transferring data to other computers.

13. A piece of equipment according to claim 1, which displays the length of each rowing stroke.

14. A piece of equipment according to claim 1, which displays the trajectory and the angle of each simulated oar blade.

15. A piece of equipment according to claim 1, which displays the sequence in which a rower moves his/her legs and arms throughout each stroke.

16. A piece of equipment according to claim 1, which displays the power transferred to the flywheel by each oar handle.

17. A piece of equipment according to claim 1, which displays the simulated path of the simulated rowing boat in water.
